# EUROPÄISCHE PATENTSCHRIFT

(11) **EP 3 543 661 B1**
(45) Veröffentlichungstag und Bekanntmachung des Hinweises auf die Patenterteilung: **19.05.2021**
(21) Anmeldenummer: 19164350.1
(22) Anmeldetag: 21.03.2019
(51) Int. Cl.: G01G 1/00, G01K 1/02, G01K 3/10, G01K 13/08

(54) **TEMPERATURMESSVERFAHREN FÜR EIN FAHRZEUG UND TEMPERATURMESSSYSTEM FÜR EIN FAHRZEUG**
TEMPERATURE MEASURING METHOD FOR A VEHICLE AND TEMPERATURE MEASURING SYSTEM FOR A VEHICLE
PROCÉDÉ DE MESURE DE LA TEMPÉRATURE POUR UN VÉHICULE ET SYSTÈME DE MESURE DE LA TEMPÉRATURE POUR UN VÉHICULE

(30) Priorität: 23.03.2018 DE 102018204513
(43) Veröffentlichungstag der Anmeldung: 25.09.2019
(73) Patentinhaber: Continental Automotive GmbH, 30165 Hannover (DE)
(72) Erfinder: Dohmen, Ralf, 78050 Villingen-Schwenningen (DE); Sardeiro, Thiago, 78048 Villingen-Schwenningen (DE)
(74) Vertreter: Continental Corporation

(56) Entgegenhaltungen:
- WO-A1-2014/000932
- DE-A1- 10 004 464
- US-A1- 2016 076 948

## Beschreibung

Es wird ein Temperaturmessverfahren für ein Fahrzeug angegeben. Darüber hinaus wird ein Temperaturmesssystem für ein Fahrzeug angegeben.

Aus WO 2014/000932 A1 ist ein Dehnmessstreifen bekannt, dem ein Temperatursensor zugeordnet sein kann. Messungen des Temperatursensors können dabei zu einer Kompensation von Temperatureinflüssen auf Messungen des Dehnmessstreifens dienen.

Aus US 2016/076948 A1 ist ein Sensor bekannt, der im Bereich eines Radlagers angeordnet ist. Mit dem Sensor wird eine Temperatur des Radlagers gemessen, und es wird ein Warnsignal ausgegeben, beispielsweise wenn das Radlager zu heiß wird.

DE 100 04 464 A1 offenbart ein Verfahren zur Überwachung von Temperaturen einer Achse, wobei, wenn sich eine gelesene Temperatur der Achse von einer erwarteten Temperatur der Achse unterscheidet, ein Anzeigen, dass die Achse möglicherweise einem Problem ausgesetzt ist, erfolgt.

Eine zu lösende Aufgabe besteht darin, ein Verfahren anzugeben, das auf unerwünschte Beeinträchtigungen einer Achse eines Fahrzeuges hinweist. Eine weitere zu lösende Aufgabe besteht darin, ein System und ein Fahrzeug anzugeben, womit ein solches Verfahren durchführbar ist.

Diese Aufgaben werden unter anderem durch den Gegenstand des Patentanspruchs 1 und des Patentanspruchs 9 gelöst. Vorteilhafte Ausgestaltungen und Weiterbildungen sind Gegenstand der abhängigen Patentansprüche.

Gemäß zumindest einer Ausführungsform wird das Temperaturmessverfahren bei einem Fahrzeug mit einer Achse und einem der Achse zugeordnetem Temperatursensor durchgeführt. Der Temperatursensor ist dazu eingerichtet, eine Temperatur oder eine Temperaturveränderung der Achse am Ort des Temperatursensors zu erfassen. Das Verfahren umfasst einen Schritt A), in dem die Temperatur oder die Temperaturveränderung der Achse am Ort des Temperatursensors mittels des Temperatursensors erfasst wird und entsprechende Messsignale, die repräsentativ für die Temperatur oder Temperaturveränderung der Achse sind, erzeugt werden. In einem Schritt B) werden die Messsignale an eine Auswerteeinheit weitergeleitet. In einem Schritt C) wird abhängig von den Messsignalen in der Auswerteeinheit ein Ausgabesignal zum optischen und/oder akustischen und/oder haptischen Signalisieren einer Information, die repräsentativ für die Temperatur oder Temperaturveränderung der Achse ist, erzeugt. In einem Schritt D) wird die Information abhängig vom Ausgangssignal optisch und/oder akustisch und/oder haptisch signalisiert.

Die Schritte A) bis D) werden bevorzugt in der angegebenen Reihenfolge ausgeführt.

Der vorliegenden Erfindung liegt insbesondere die Erkenntnis zu Grunde, dass bei Fahrzeugen, insbesondere mittleren und schweren LKWs und Bussen, die Achsen vielen äußeren Einflüssen unterliegen, wie mechanischer Belastung oder Hitze. Während beispielsweise eines Bremsvorgangs wird Energie im Bremssystem erzeugt. Im Falle von Konstruktionsfehlern oder Fehlfunktionen kann dabei eine Menge Wärme von dem Bremssystem auf die Achse übertragen werden. Dies kann insofern problematisch sein, als dass dadurch die Stabilität der Achse beeinträchtigt wird und/oder auf der Achse angebrachte Komponenten, wie beispielsweise Bremsleitungen, beeinträchtigt werden, beispielsweise schmelzen.

Bei der vorliegenden Erfindung wird von einem Temperatursensor Gebrauch gemacht, der einer Achse zugeordnet ist. Mittels des Temperatursensors wird eine Temperatur oder Temperaturveränderung der Achse gemessen und anschließend ausgewertet. Konstruktionsfehler oder Beladungsfehler oder fehlerhaftes Verhalten des Fahrzeugführers können dann frühzeitig erkannt werden und Gefahren aufgrund einer Überhitzung der Achsen können beseitigt werden.

Der Temperatursensor ist vorliegend an einem Ort auf der Achse aufgebracht oder integriert und dazu eingerichtet, eine Temperatur oder Temperaturveränderungen der Achse an diesem Ort zu erfassen. Dazu steht der Temperatursensor bevorzugt in unmittelbarem oder mittelbarem Kontakt mit der Achse des Fahrzeuges. Der Temperatursensor umfasst beispielsweise einen Heißleiter oder Kaltleiter. Beispielsweise sind auf eine Temperaturveränderung sensitive Komponenten des Temperatursensors, zum Beispiel ein elektrischer Widerstand, höchstens 10 cm oder höchstens 5 cm von der Achse beabstandet angeordnet.

Bei den Messsignalen handelt es sich insbesondere um weiterverarbeitbare Signale, zum Beispiel weiterleitbare Signale, beispielsweise digitalisierte Signale. Zum Beispiel werden durch den Temperatursensor Strom- oder Spannungsänderungen erzeugt, die anschließend von einem Analog-Digital-Wandler in digitale Messsignale umgewandelt werden. Der Analog-Digital-Wandler kann eine Komponente des Temperatursensors sein. Die Messsignale sind repräsentativ für die von dem Temperatursensor erfasste Temperatur oder Temperaturveränderung. Das heißt, die Messsignale tragen Informationen über die Temperatur oder Temperaturveränderung der Achse.

Das Weiterleiten der Messsignale kann auf verschiedene Arten erfolgen. Eine kabellose oder auf Kabeln basierende Weiterleitung ist denkbar. Beispielsweise können über eine Datenschnittstelle die Messsignale in ein fahrzeuginternes Netzwerk eingespeist werden, zum Beispiel in einen kabelbasierten CAN-Bus. Alternativ oder zusätzlich können die Messsignale mittels Wi-Fi oder Bluetooth weitergeleitet werden.

Die Auswerteeinheit kann eine Steuereinheit, zum Beispiel einen digitalen Tachographen, umfassen. Die Auswerteeinheit ist dazu eingerichtet, abhängig von den Messsignalen ein Ausgabesignal zu erzeugen, mit dem akustisch und/oder optisch und/oder haptisch eine Information signalisiert werden kann. Die Information ist dabei repräsentativ für die Temperatur oder Temperaturveränderung der Achse. Es handelt sich also um eine Temperaturinformation.

Die Information wird dann anschließend optisch und/oder akustisch und/oder haptisch signalisiert, sodass sie für einen Anwender wahrnehmbar ist. Der Anwender erhält durch die Signalisierung, insbesondere unmittelbar, die Information über die Temperatur oder Temperaturveränderung der Achse. Beispielsweise wird ein elektrisches Ausgabesignal durch einen Lautsprecher und/oder ein Anzeigeelement und/oder ein Vibrationselement in ein akustisches und/oder optisches und/oder haptisches Signal umgewandelt, das die Information vermittelt.

Zwischen dem Temperatursensor und der Auswerteeinheit können eine oder mehrere weitere elektronische Komponenten, zum Beispiel fahrzeuginterne elektronische Komponenten, wie zum Beispiel Steuereinheiten oder Datenverarbeitungsvorrichtungen, zwischengeschaltet sein. Über diese zwischengeschalteten elektronischen Komponenten können die Messsignale an die Auswerteeinheit weitergeleitet werden. Es können hier aber auch von dem Temperatursensor kommende Signale, die repräsentativ für die Temperatur oder Temperaturveränderung sind, erst in die Messsignale umgewandelt werden. Die Zuleitung hin zu diesen elektronischen Komponenten und/oder weg von diesen elektronischen Komponenten kann wie oben dargestellt vertrauenswürdig erfolgen. In der oder den elektronischen Komponenten können die Messsignale zwischengespeichert werden.

Mit dem Verfahren können auch Temperaturen oder Temperaturveränderungen an mehreren Positionen einer Achse und/oder an mehreren Achsen eines Fahrzeuges gemessen werden. Beispielsweise sind dazu an mehreren Achsen und/oder an mehreren Orten einer Achse Temperatursensoren angebracht. Die den jeweiligen Temperatursensoren zugeordneten Messsignale können dann alle an eine gemeinsame Auswerteeinheit weitergeleitet werden, die entsprechende Ausgabesignale erzeugt.

Das Fahrzeug umfasst ein Wägesystem, insbesondere ein fahrzeugeigenes Wägesystem, Englisch: On Board Weighing System, mit einem Wägesensor zum Messen einer Achslast der Achse. Bei dem Wägesensor kann es sich beispielsweise um einen Dehnstreifen-Sensor oder um einen Luftdrucksensor handeln. Mit Hilfe des Wägesensors wird beispielsweise auf den Beladungszustand des Fahrzeugs rückgeschlossen. Mit Hilfe des Wägesensors erzeugte Messsignale, die repräsentativ für eine Achslast sind, werden beispielsweise ebenfalls an die Auswerteeinheit übermittelt. Die Auswerteinheit kann zum Beispiel auch abhängig von diesen Messsignale Ausgabesignale erzeugen, die entsprechende Gewichtsinformationen tragen. Diese Gewichtsinformationen können dann ebenfalls optisch und/oder akustisch und/oder haptisch signalisiert werden.

Der Temperatursensor ist ein Temperatursensor des Wägesystems. Der Temperatursensor wird zusätzlich zur Korrektur von mit Hilfe des Wägesensors erzeugten Messsignalen verwendet.

Insbesondere sind Wägesensoren häufig sensitiv auf Temperaturveränderungen. Um mittels des Wägesensors zuverlässige Informationen über die wirkende Achslast zu bekommen, werden daher in Wägesystemen häufig Temperatursensoren eingesetzt, mit Hilfe der die durch Temperaturschwankungen bedingten Effekte in dem Wägesensor korrigiert werden können. Dieser daher häufig sowieso vorhandene Temperatursensor kann mit dem vorliegenden Verfahren genutzt werden, um einem Anwender auch unmittelbare Informationen über die Temperatur oder Temperaturveränderung der Achse bereitzustellen.

Gemäß zumindest einer Ausführungsform werden die Messsignale im Schritt B) vertrauenswürdig an die Auswerteeinheit weitergeleitet. "Vertrauenswürdig" bedeutet vorliegend, dass die Messsignale fälschungssicher an die Auswerteeinheit weitergeleitet werden. Zum Beispiel werden die Messsignale vor dem Weiterleiten mit einer digitalen Unterschrift versehen oder verschlüsselt. Die Verschlüsselung oder die Unterzeichnung mit einer digitalen Unterschrift erfolgt bevorzugt fahrzeugintern und/oder unmittelbar nach oder beim Erzeugen der Messsignale. Anders ausgedrückt werden die Messsignale fälschungssicher gemacht, bevor sie das Fahrzeug verlassen können.

Insbesondere wenn Messwerte durch gesetzliche Grenzwerte eingeschränkt werden, besteht die Gefahr, dass diese Messewerte beziehungsweise die Messsignale zum Beispiel aus finanziellen Gründen manipuliert oder gefälscht werden. In diesem Fall kann eine vertrauenswürdige oder fälschungssichere Weiterleitung der Messsignale an eine Auswerteeinheit vorteilhaft sein.

Gemäß zumindest einer Ausführungsform ist die im Schritt D) signalisierte Information ein Temperaturwert oder ein Wert der Temperaturveränderung. Beispielsweise werden aus den Messsignalen Werte für die Temperatur oder Temperaturveränderungen erzeugt oder berechnet, die grafisch, zum Beispiel auf einem Bildschirm, dargestellt werden oder akustisch ausgegeben werden.

Gemäß zumindest einer Ausführungsform umfasst das Temperaturmessverfahren einen weiteren Schritt E), in dem ein Schwellwert vorgegeben wird. Die im Schritt D) signalisierte Information wird dann beispielsweise über ein Warnsignal signalisiert, das ausgegeben wird, sobald die durch die Messsignale repräsentierte Temperatur oder Temperaturveränderung den Schwellwert überschreitet und/oder unterschreitet. Bei dem Warnsignal kann es sich beispielsweise um ein akustisches Signal oder um ein optisches Signal, beispielsweise das Aufleuchten einer LED, handeln. Das Ermitteln, ob der Schwellwert über oder unterschritten ist, wird insbesondere mithilfe der Auswerteeinheit durchgeführt.

Gemäß zumindest einer Ausführungsform ist das Fahrzeug ein Kraftfahrzeug, insbesondere ein LKW oder ein Bus. Statt eines Kraftfahrzeuges ist aber auch ein Schienenfahrzeug denkbar.

Gemäß zumindest einer Ausführungsform umfasst das Fahrzeug eine Bremsscheibe oder Bremstrommel. Der Temperatursensor ist dann zum Beispiel in einem Abstand von höchstens 50 cm oder höchstens 40 cm oder höchstens 30 cm oder höchstens 20 cm von der Bremsscheibe oder Bremstrommel entfernt auf der Achse aufgebracht. Die Entfernung ist dabei insbesondere für die auf Temperaturveränderung sensitiven Komponenten, zum Beispiel elektrische Widerstände, des Temperatursensors angegeben. Je näher der Temperatursensor an der Bremsscheibe oder Bremstrommel ist, desto besser können unter Umständen durch das Bremssystem verursachte Überhitzungen der Achse ermittelt werden.

Gemäß zumindest einer Ausführungsform ist die Auswerteeinheit in dem Fahrzeug integriert. Das heißt, die Auswerteeinheit ist eine fahrzeuginterne oder fahrzeugeigene Auswerteeinheit. Beispielsweise werden die Informationen, die die Temperatur oder Temperaturveränderung für den Anwender signalisieren, dann auch direkt an den Fahrzeugführer als Anwender signalisiert. Zum Beispiel ist die Auswerteeinheit in einer Fahrzeugkabine integriert. Die durch die Messsignale repräsentierte Temperatur oder Temperaturveränderung der Achse kann dem Fahrzeugführer beispielsweise in Echtzeit signalisiert werden.

Gemäß zumindest einer Ausführungsform ist die Auswerteeinheit eine externe Einheit, die nicht im Fahrzeug integriert ist. Die Auswerteeinheit umfasst dann beispielsweise einen externen Computer oder ein externes Smartphone. Zum Beispiel werden die Messsignale dann unmittelbar nach deren Aufnahme und Erzeugung an die externe Auswerteeinheit übermittelt, zum Beispiel über ein kabelloses Übertragungsverfahren. Die Informationen können dann einem Anwender, der kein Fahrzeuginsasse ist, signalisiert werden.

Es ist aber auch möglich, dass die Messsignale zunächst in einer elektronischen Komponente des Fahrzeuges gespeichert werden, beispielsweise in einer Steuereinheit. Beispielsweise werden die Messsignale dann erst nach dem Abschluss einer Fahrt des Fahrzeuges an die Auswerteeinheit weitergeleitet.

Darüber hinaus wird ein Temperaturmesssystem und ein Fahrzeug angegeben. Das Temperaturmesssystem ist insbesondere dazu eingerichtet, ein hier beschriebenes Verfahren durchzuführen. Alle im Zusammenhang mit dem Verfahren beschriebenen Merkmale sind daher auch für das Temperaturmesssystem offenbart und umgekehrt.

Gemäß zumindest einer Ausführungsform umfasst das Temperaturmesssystem einen Temperatursensor und eine Auswerteeinheit. Das Temperaturmesssystem ist dazu eingerichtet, ein Verfahren gemäß mindestens einer der zuvor beschriebenen Ausführungsformen durchzuführen. Bei dem Temperaturmesssystem kann es sich beispielsweise um ein Tachographsystem handeln. Die Auswerteeinheit umfasst dann beispielsweise einen digitalen Tachographen.

Nachfolgend wird ein hier beschriebenes Temperaturmessverfahren für ein Fahrzeug sowie ein hier beschriebenes Temperaturmesssystem für ein Fahrzeug unter Bezugnahme auf Zeichnungen anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
Figuren 1 bis 3 Ausführungsbeispiele des Temperaturmesssystems für ein Fahrzeug,
Figuren 4A und 4B Ausführungsbeispiele des Temperaturmessverfahrens für ein Fahrzeug anhand von Ablaufdiagrammen.

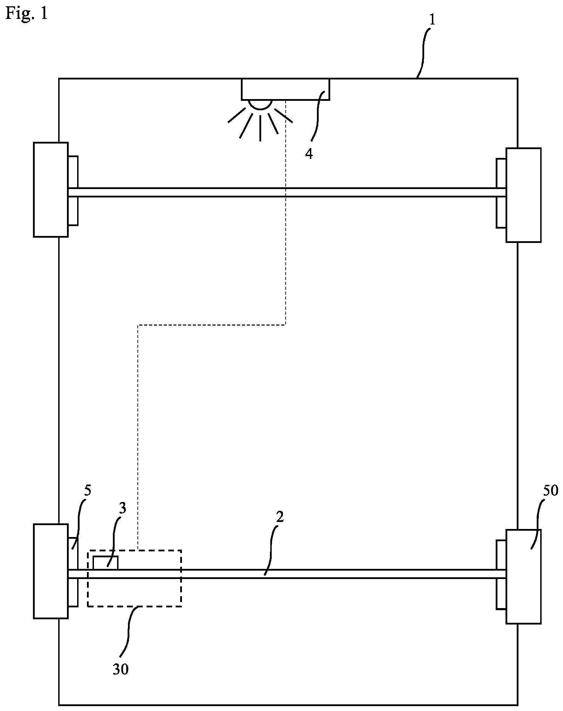

In der Figur 1 ist ein erstes Ausführungsbeispiel des Temperaturmesssystems gezeigt. Das Temperaturmesssystem umfasst einen Temperatursensor 3 und eine Auswerteeinheit 4. Das Temperaturmesssystem ist in ein Fahrzeug 1, zum Beispiel einen LKW, eingebaut. Das Fahrzeug 1 umfasst eine Achse 2, an der Räder 50 angebracht sind. An der Achse 2 sind ferner Bremsscheiben 5 angebracht. Der Temperatursensor 3 ist auf der Achse 2 und nahe einer Bremsscheibe 5, beispielsweise in einem Abstand von höchstens 50 cm von der Bremsscheibe 5, angeordnet. Statt der Bremsscheibe 5 ist auch eine Bremstrommel 5 denkbar.

Der Temperatursensor 3 ist Teil eines fahrzeuginternen Wägesystems 30. Das Wägesystem 30 ist zur Verwiegung des Fahrzeuges 1 während des Betriebs des Fahrzeuges 1 eingerichtet. Insbesondere umfasst das Wägesystem 30 noch einen Wägesensor (nicht dargestellt). Der Temperatursensor 3 umfasst beispielsweise einen Heißleiter oder Kaltleiter.

Während des Betriebs des Fahrzeuges 1 kann der Temperatursensor 3 die Temperatur oder eine Temperaturveränderung der Achse 2 am Ort des Temperatursensors 3 erfassen und entsprechende Messsignale an die Auswerteeinheit 4 übermitteln. Die Messsignale werden beispielsweise vertrauenswürdig übermittelt. Dazu werden die Messsignale bevorzugt vor der Übermittlung an die Auswerteeinheit 4 verschlüsselt oder mit einer digitalen Unterschrift versehen.

Die Auswerteeinheit 4 ist vorliegend im Fahrzeug 1 integriert, beispielsweise in einer Fahrerzelle. Die Auswerteeinheit 4 ist dazu eingerichtet, ein Ausgabesignal aus den Messsignalen zu erzeugen, wobei das Ausgabesignal zur Signalisierung einer Information dient, die repräsentativ für die mithilfe des Temperatursensors 3 gemessene Temperatur oder Temperaturveränderung ist. Vorliegend wird die Information einem Anwender durch eine blinkende LED signalisiert. Die Messsignale werden innerhalb des Fahrzeugs über Kabelverbindungen (siehe gestrichelte Linien) an die Auswerteeinheit 4 weitergeleitet.

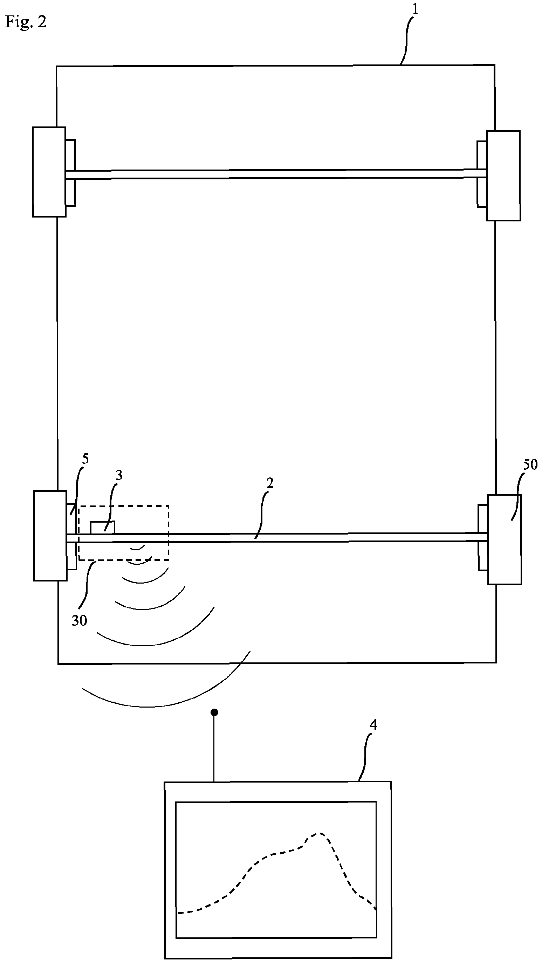

In der Figur 2 ist ein zweites Ausführungsbeispiel des Temperaturmesssystems gezeigt. Das Temperaturmesssystem ist teilweise in ein Fahrzeug 1 integriert. Der Temperatursensor 3 des Temperaturmesssystems ist wiederum auf der Achse 2 des Fahrzeuges 1 aufgebracht. Die Auswerteeinheit 4 ist eine externe Einheit, die nicht im Fahrzeug 1 integriert ist. Die mithilfe des Temperatursensors 3 erzeugten Messsignale werden an die Auswerteeinheit 4 vorliegend per Funk übermittelt. Dazu umfasst das Temperaturmesssystem beispielsweise eine Antenne im Fahrzeug sowie eine Antenne an der Auswerteeinheit 4. Während des Betriebs des Fahrzeugs 1 werden die Messsignale an die Auswerteeinheit 4 beispielsweise über eine Strecke von mehr als 1 km per Funk gesendet.

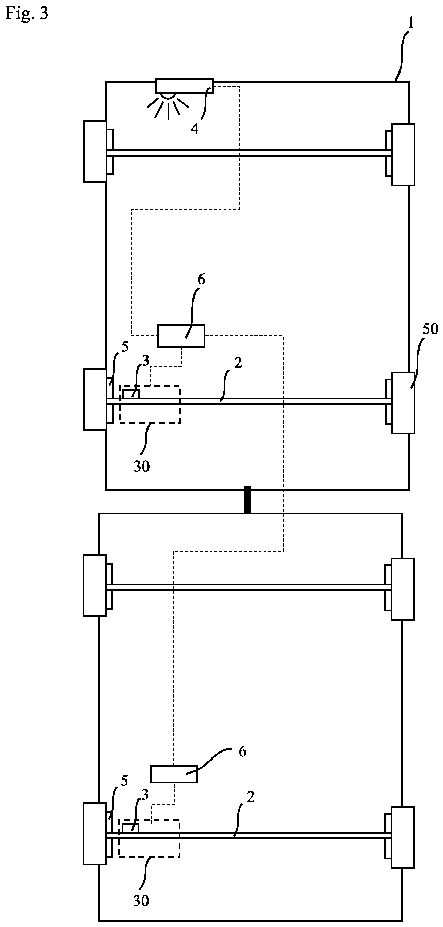

In der Figur 3 ist ein drittes Ausführungsbeispiel des Temperaturmesssystems gezeigt. Vorliegend umfasst das Temperaturmesssystem eine Auswerteeinheit 4 innerhalb eines Fahrzeugs 1 sowie zwei Temperatursensoren 3. Die Temperatursensoren 3 sind auf Achsen 2 einer Zugmaschine und eines Anhängers aufgebracht. Das Temperaturmesssystem umfasst ferner zwei Steuereinheiten 6 sowohl in der Zugmaschine als auch in dem Anhänger. Die Steuereinheit 6 der Zugmaschine ist eine Master-Steuereinheit.

Die in dem Anhänger mit Hilfe des Temperatursensors 3 erzeugten Messsignale werden zuerst an die Steuereinheit 6 in dem Anhänger weitergeleitet. Ausgehend von der Steuereinheit 6 des Anhängers werden die Messsignale dann an die Master-Steuereinheit 6 in der Zugmaschine weitergeleitet. Die mit Hilfe des Temperatursensors 3 in der Zugmaschine erzeugten Messsignale werden direkt an die Master-Steuereinheit 6 geleitet.

Die Messsignale können dann in der Master-Steuereinheit 6 gespeichert werden und später an eine Auswerteeinheit 4, zum Beispiel eine externe Auswerteeinheit 4, weitergeleitet werden, mit der dann die Messsignale ausgewertet werden.

Im vorliegenden Ausführungsbeispiel werden die Messsignale von der Master-Steuereinheit 6 aber unmittelbar an eine fahrzeuginterne Auswerteeinheit 4 übermittelt, dort ausgewertet und entsprechend für einen Anwender Informationen signalisiert. Die Master-Steuereinheit 6 kann auch Teil der Auswerteeinheit 4 sein.

In den bisher gezeigten Ausführungsbeispielen umfasste die Auswerteeinheit 4 insbesondere einen digitalen Tachographen.

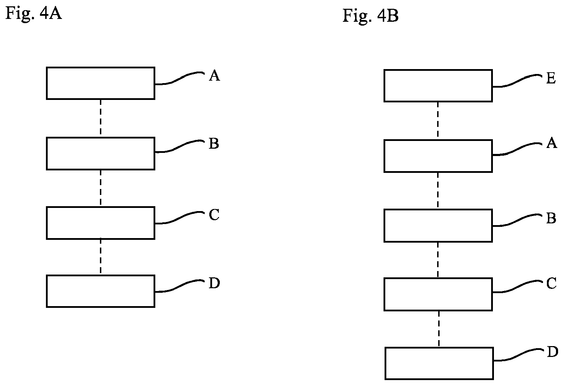

In den Figuren 4A und 4B sind zwei Ausführungsbeispiele des Temperaturmessverfahrens für ein Fahrzeug 1 anhand von Ablaufdiagrammen dargestellt. Diese Verfahren können insbesondere mit den in den vorherigen Ausführungsbeispielen beschriebenen Temperaturmesssystemen durchgeführt werden.

In dem Ausführungsbeispiel der Figur 4A umfasst das Verfahren einen Schritt A), in dem mittels des Temperatursensors 3 eine Temperatur oder eine Temperaturveränderung der Achse 2 des Fahrzeugs 1 am Ort des Temperatursensors 3 erfasst wird und entsprechende Messsignale, die repräsentativ für die Temperatur oder Temperaturveränderung der Achse 2 sind, erzeugt werden.

In einem darauffolgenden Schritt B) werden die Messsignale an die Auswerteeinheit 4 weitergeleitet.

In einem anschließenden Schritt C) wird abhängig von den Messsignalen in der Auswerteeinheit ein Ausgabesignal zum optischen und/oder akustischen und/oder haptischen Signalisieren einer Information erzeugt, wobei die Information repräsentativ für die Temperatur oder Temperaturveränderung der Achse ist.

In einem Schritt D) wird die Information abhängig vom Ausgangssignal optisch und/oder akustisch und/oder haptisch signalisiert. Beispielsweise werden die Temperatur oder Temperaturveränderung der Achse am Ort des Temperatursensors grafisch dargestellt beziehungsweise auf einem Display angezeigt.

Bei dem Ausführungsbeispiel der Figur 4B umfasst das Verfahren einen zusätzlichen Schritt E), der bevorzugt vor dem Schritt A) ausgeführt wird. In dem Schritt E) wird ein Schwellwert für die Temperatur oder Temperaturveränderung der Achse vorgegeben. Im Schritt D) wird die Information zum Beispiel in Form eines Warnsignals signalisiert, das ausgegeben wird, sobald die durch die Messsignale repräsentierte Temperatur oder Temperaturveränderung den Schwellwert überschreitet und/oder unterschreitet. Ob dies der Fall ist, wird beispielsweise mittels der Auswerteeinheit ermittelt.

## Patentansprüche

1. Temperaturmessverfahren für ein Fahrzeug (1) mit einer Achse (2) und einem an einem Ort auf der Achse (2) aufgebrachten oder integrierten Temperatursensor (3), wobei der Temperatursensor (3) dazu eingerichtet ist, eine Temperatur oder eine Temperaturveränderung der Achse (2) am Ort des Temperatursensors (3) zu erfassen,
umfassend die Schritte:
A) Erfassen der Temperatur oder der Temperaturveränderung der Achse (2) am Ort des Temperatursensors (3) mittels des Temperatursensors (3) und Erzeugen von entsprechenden Messsignalen, die repräsentativ für die Temperatur oder Temperaturveränderung der Achse (2) sind;
B) Weiterleiten der Messsignale an eine Auswerteeinheit (4);
C) Erzeugen eines Ausgabesignals zum optischen und/oder akustischen und/oder haptischen Signalisieren einer Information abhängig von den Messsignalen in der Auswerteeinheit (4), wobei die Information repräsentativ für die Temperatur oder Temperaturveränderung der Achse (2) ist;
D) optisches und/oder akustisches und/oder haptisches Signalisieren der Information abhängig von dem Ausgangssignal, wobei
- das Fahrzeug (1) ein Wägesystem (30) mit einem Wägesensor zum Messen einer Achslast der Achse (2) umfasst,
- der Temperatursensor (3) ein Temperatursensor des Wägesystems (30) ist, der zusätzlich zur Korrektur von mit Hilfe des Wägesensors erzeugten Messsignalen verwendet wird.

2. Temperaturmessverfahren nach Anspruch 1,
wobei die Messsignale im Schritt B) fälschungssicher an die Auswerteeinheit (4) weitergeleitet werden.

3. Temperaturmessverfahren nach einem der vorhergehenden Ansprüche,
wobei die im Schritt D) signalisierte Information ein Temperaturwert oder ein Wert der Temperaturveränderung ist.

4. Temperaturmessverfahren nach einem der vorhergehenden Ansprüche, weiter umfassend den Schritt E):
E) Vorgeben eines Schwellwertes, wobei
- die im Schritt D) signalisierte Information über ein Warnsignal signalisiert wird, das ausgegeben wird, sobald die durch die Messsignale repräsentierte Temperatur oder Temperaturveränderung den Schwellwert überschreitet und/oder unterschreitet.

5. Temperaturmessverfahren nach einem der vorhergehenden Ansprüche,
wobei das Fahrzeug (1) ein Kraftfahrzeug (1) ist.

6. Temperaturmessverfahren nach einem der vorhergehenden Ansprüche,
wobei das Fahrzeug (1) eine Bremsscheibe (5) oder Bremstrommel (5) umfasst und der Temperatursensor (3) in einem Abstand von höchstens 50 cm von der Bremsscheibe (5) oder Bremstrommel (5) entfernt auf der Achse (2) aufgebracht ist.

7. Temperaturmessverfahren nach einem der vorhergehenden Ansprüche,
wobei die Auswerteeinheit (4) in dem Fahrzeug integriert ist.

8. Temperaturmessverfahren nach einem der vorhergehenden Ansprüche,
wobei die Auswerteeinheit (4) eine externe Einheit ist, die nicht im Fahrzeug (1) integriert ist.

9. Temperaturmesssystem und Fahrzeug (1), das Fahrzeug (1) umfassend
- eine Achse (2);
- ein Wägesystem (30) mit einem Wägesensor zum Messen einer Achslast der Achse (2);
wobei das Temperaturmesssystem in das Fahrzeug (1) eingebaut oder teilweise in das Fahrzeug (1) integriert ist;
**dadurch gekennzeichnet, dass**
- das Temperaturmesssystem einen an einem Ort auf der Achse (2) aufgebrachten oder integrierten Temperatursensor (3) umfasst, der ein Temperatursensor des Wägesystems (30) ist; und dass
- das Temperaturmesssystem eine Auswerteeinheit (4) umfasst, die im Fahrzeug (1) integriert ist oder die eine externe Einheit ist, die nicht im Fahrzeug (1) integriert ist; wobei
- das Temperaturmesssystem dazu eingerichtet ist, ein Verfahren nach einem der vorhergehenden Ansprüche auszuführen.

## Claims

1. Temperature measurement method for a vehicle (1) having an axle (2) and a temperature sensor (3) mounted or integrated at a location on the axle (2), wherein the temperature sensor (3) is configured for capturing a temperature or temperature change of the axle (2) at the location of the temperature sensor (3),
comprising the steps of:
A) capturing the temperature or the temperature change of the axle (2) at the location of the temperature sensor (3) by means of the temperature sensor (3) and generating corresponding measurement signals that are representative of the temperature or the temperature change of the axle (2);
B) passing on the measurement signals to an evaluation unit (4);
C) generating an output signal for signalling optically and/or acoustically and/or haptically a piece of information in dependence on the measurement signals in the evaluation unit (4), wherein the piece of information is representative of the temperature or the temperature change of the axle (2);
D) signalling optically and/or acoustically and/or haptically the piece of information in dependence on the output signal, wherein
- the vehicle (1) comprises a weighing system (30) having a weighing sensor for measuring an axle load on the axle (2),
- the temperature sensor (3) is a temperature sensor of the weighing system (30), which is additionally used for correcting measurement signals generated with the aid of the weighing sensor.

2. Temperature measurement method according to Claim 1,
wherein the measurement signals in step B) are passed on to the evaluation unit (4) in a tamper-proof manner.

3. Temperature measurement method according to either of the preceding claims,
wherein the piece of information signalled in step D) is a temperature value or a value of the temperature change.

4. Temperature measurement method according to one of the preceding claims, further comprising the step E):
E) prescribing a threshold value, wherein
- the piece of information signalled in step D) is signalled via a warning signal that is output as soon as the temperature or temperature change represented by the measurement signals exceeds and/or falls below the threshold value.

5. Temperature measurement method according to one of the preceding claims,
wherein the vehicle (1) is a motor vehicle (1).

6. Temperature measurement method according to one of the preceding claims,
wherein the vehicle (1) comprises a brake disk (5) or brake drum (5) and the temperature sensor (3) is mounted on the axle (2) at a distance of at most 50 cm from the brake disk (5) or brake drum (5).

7. Temperature measurement method according to one of the preceding claims,
wherein the evaluation unit (4) is integrated in the vehicle.

8. Temperature measurement method according to one of the preceding claims,
wherein the evaluation unit (4) is an external unit that is not integrated in the vehicle (1).

9. Temperature measurement system and vehicle (1), with the vehicle (1) comprising
- an axle (2);
- a weighing system (30) having a weighing sensor for measuring an axle load on the axle (2);
wherein the temperature measurement system is mounted in the vehicle (1) or is at least integrated in the vehicle (1) ;
**characterized in that**
- the temperature measurement system comprises a temperature sensor (3), which is mounted or integrated at a location on the axle (2) and is a temperature sensor of the weighing system (30); and **in that**
- the temperature measurement system comprises an evaluation unit (4), which is integrated in the vehicle (1) or is an external unit that is not integrated in the vehicle (1); wherein
- the temperature measurement system is configured for carrying out a method according to one of the preceding claims.

## Revendications

1. Procédé de mesure de température d'un véhicule (1) pourvu d'un essieu (2) et d'un capteur de température (3) monté ou intégré à un emplacement sur l'essieu (2), le capteur de température (3) étant conçu pour détecter une température ou une variation de température de l'essieu (2) à l'emplacement du capteur de température (3), le procédé comprenant les étapes suivantes :
A) détecter la température ou la variation de température de l'essieu (2) à l'emplacement du capteur de température (3) au moyen du capteur de température (3) et générer des signaux de mesure correspondants qui sont représentatifs de la température ou de la variation de température de l'essieu (2) ;
B) transmettre les signaux de mesure à une unité d'évaluation (4) ;
C) générer un signal de sortie destiné à la signalisation optique et/ou acoustique et/ou haptique d'une information en fonction des signaux de mesure dans l'unité d'évaluation (4), l'information étant représentative de la température ou de la variation de température de l'essieu (2) ;
D) effectuer une signalisation optique et/ou acoustique et/ou haptique de l'information en fonction du signal de sortie,
- le véhicule (1) comprenant un système de pesage (30) pourvu d'un capteur de pesage pour mesurer une charge de l'essieu (2),
- le capteur de température (3) étant un capteur de température du système de pesage (30) qui est en outre utilisé pour corriger des signaux de mesure générés à l'aide du capteur de pesage.

2. Procédé de mesure de température selon la revendication 1,
les signaux de mesure à l'étape B) étant transmis de manière infalsifiable à l'unité d'évaluation (4).

3. Procédé de mesure de température selon l'une des revendications précédentes,
l'information signalée à l'étape D) étant une valeur de température ou une valeur de variation de température.

4. Procédé de mesure de température selon l'une des revendications précédentes, comprenant en outre l'étape E) suivante :
E) spécifier une valeur de seuil, l'information signalée à l'étape D) étant signalée par le biais d'un signal d'avertissement qui est émis dès que la température ou la variation de température représentée par les signaux de mesure devient supérieure et/ou inférieure à la valeur de seuil.

5. Procédé de mesure de température selon l'une des revendications précédentes,
le véhicule (1) étant un véhicule automobile (1).

6. Procédé de mesure de température selon l'une des revendications précédentes,
le véhicule (1) comprenant un disque de frein (5) ou un tambour de frein (5) et le capteur de température (3) étant monté sur l'essieu (2) à une distance d'au plus 50 cm du disque de frein (5) ou du tambour de frein (5) .

7. Procédé de mesure de température selon l'une des revendications précédentes,
l'unité d'évaluation (4) étant intégrée dans le véhicule.

8. Procédé de mesure de température selon l'une des revendications précédentes,
l'unité d'évaluation (4) étant une unité extérieure qui n'est pas intégrée dans le véhicule (1).

9. Système de mesure de température et véhicule (1), le véhicule (1) comprenant
- un essieu (2) ;
- un système de pesage (30) pourvu d'un capteur de pesage destiné à mesurer une charge de l'essieu (2) ;
le système de mesure de température étant incorporé au véhicule (1) ou partiellement intégré dans le véhicule (1) ;
**caractérisé en ce que**
- le système de mesure de température comprend un capteur de température (3) qui est monté ou intégré à un emplacement sur l'essieu (2) et qui est un capteur de température du système de pesage (30) ; et
- le système de mesure de température comprend une unité d'évaluation (4) qui est intégrée dans le véhicule (1) ou qui est une unité extérieure qui n'est pas intégrée dans le véhicule (1) ;
- le système de mesure de température étant conçu pour mettre en œuvre un procédé selon l'une des revendications précédentes.
